# EUROPEAN PATENT APPLICATION

(11) **EP 4 151 981 A1**
(43) Date of publication of application: **22.03.2023**
(21) Application number: 21764629.8
(22) Date of filing: 08.03.2021
(51) Int. Cl.: G01N 1/24

(54) **DEVICE AND METHOD FOR SAMPLING AND MONITORING VOLATILE COMPONENTS IN AIR**

(30) Priority: 06.03.2020 ES 202030192
(71) Applicant: Universidad De Córdoba, 14005 Córdoba (ES)
(72) Inventor: CÁRDENAS ARANZANA, María Soledad, 14014 Córdoba (ES); LUCENA RODRÍGUEZ, Rafael, 14140 Córdoba (ES); ALCUDIA LEÓN, María del Carmen, 14014 Córdoba (ES); LASARTE ARAGONÉS, Guillermo, 14140 Córdoba (ES); CASADO CARMONA, Francisco Antonio, 14014 Córdoba (ES)
(74) Representative: San Martin Alarcia, Esther
(86) International application number: PCT/ES2021/070166
(87) International publication number: WO 2021/176127

(57) **Abstract**

Disclosed is an active sampling device comprising a fan on the blades of which a sorbent material is disposed, and a method for monitoring volatile compounds in the air.

## Description

### Field of the invention

The present invention falls within the field of active sampling methods of contaminants in the air, and in particular refers to an active sampling device comprising a fan in which blades a sorbent material is disposed, and its use for monitoring volatile compounds.

### Background of the invention

The monitoring of volatile compounds in air is a highly relevant problem with multiple connotations. The presence of these compounds, which may be of natural origin, has increased as a consequence of human activity. Industrial production or the automotive sector are two important sources of emission of volatile compounds. These compounds are absorbed through the mucosa of the respiratory tract and, therefore, the exposure is considerable taking into account the average volume of air breathed per day (7000-9000 L). This eminently environmental problem has been transferred to the labor area, particularly to those activities that take place in closed places (offices, laboratories) where a wide variety of different compounds can be emitted. Chemical laboratories and the researchers who work in them are especially sensitive to this problem due to the amount of reagents and solvents with which they may come into contact in their daily activity. In addition, in this context it is important to take into account the chemical reactivity itself, since volatile compounds of different toxicity can be generated by mixing and reacting substances that in principle would be innocuous.

Currently, there are several commercial sensors for the measurement of chemical compounds in air, although these sensors are designed for the determination of a limited number of species whose identity is known a priori. Thus, for example, Dräger colorimeter tubes can measure a large number of different gases and vapors. These tubes are used for the measurement of personal exposure in the work environment, leaks or for the analysis of air from sewers, wells, tanks or other closed spaces. The indicator substances contained in the tubes react with the target analyte producing a color change whose intensity depends on the concentration that the analyte presents in the analyzed air sample.

Instead, in research laboratories chemical reactions can take place in which volatile compounds of different nature are generated. In this context, it is necessary to use non-targeted analysis systems for their identification. This approach is also interesting in environmental analysis because the primary volatile compounds that are emitted, whether naturally or anthropogenic, can react through different mechanisms (for example, through photochemical reactions) generating secondary compounds of, in principle, unknown nature and toxicity. In this sense, it is necessary to take a different approach, in which the sample is analyzed directly by a multiparametric analytical method that allows the identification of the compounds found in it.

Air is a very complex matrix where the target compounds are present at very low concentration, which makes it necessary to apply an isolation/pre-concentration technique prior to analytical determination. This step can be carried out integrated into the sampling process or by transporting the sample to the laboratory where a microextraction technique is finally applied.

Sampling is a very important step in air analysis and different methods have been proposed in the literature for this purpose. These approaches are classified into two modalities: active or passive sampling procedures. Active sampling implies the forced flow of the sample, generally via a pump, as is the case of the Spanish patent ES2308898, through a sampling trap confined in a device (generally called a sampler). In passive sampling, analytes diffuse to the sorbent material following Fick's laws of diffusion.

Solid phase microextraction (SPME) is typically used for the pre-concentration of analytes, and is the most promising approach for the quantification of volatile compounds in complex matrices. The performance of classical fiber-based SPME has recently been complemented by flat extraction media. Various extraction techniques using flat phases have been proposed, such as thin film microextraction, stir membrane extraction and fabric phase sorptive extraction (FPSE), described in patent US20140274660. In this context, the tissue phases are especially interesting because they are prepared by sol-gel modification of a flat substrate (cellulose or fiberglass), which allows the immobilization of different polymers, thus increasing the versatility of the applications.

In some cases, fans have been used as a means of diffusion (pumping) of gaseous samples to pass them through a sorbent material found in an external chamber, or to cool the chamber and make extraction more favorable.

The isolation of these compounds is in itself a challenge since if the chemical nature of the compounds to be identified is not known the optimal material for their isolation cannot be selected a priori. That is why sorbents that have an adequate polarity balance are used to extract the greatest possible variety of analytes. The additional drawback is that the extracted analytes will not do so in their optimal conditions. In addition, the instrumental conditions for its final determination (for example, chromatographic conditions) do not have to coincide, which supposes an additional analytical challenge.

### Description of the invention

In a first aspect, the present invention refers to a device for sampling volatile compounds in the air that comprises a fan on which blades a sorbent material is located. Said sorbent material may be deposited or adhered to the blade or it may be the material from which the blade is made.

In a preferred embodiment of the invention, the device is operated by a portable power source, allowing the device to be easily transported.

In a second aspect, the invention refers to a sampling method with the aid of the device of the invention comprising the following steps:
a) Operating the device for a certain time. As the air flows through the fan blades the volatile compounds will be retained in the sorbent material.
b) After the sampling stage, the sorbent material is analyzed using the appropriate instrumental technique that can provide qualitative information. This analysis may be done directly on the surface of the material or it may require a chemical elution or thermal desorption for its analysis by more selective and/or sophisticated analysis techniques such as chromatography coupled with mass spectrometry.

In a preferred embodiment, in stage 1, sorbent materials of different nature are used simultaneously, which allows fractioning the sample into portions of different nature so that each analyte is extracted under optimal conditions and facilitating its subsequent analysis. This strategy allows determining substances that in more generic sorbents would not be extracted or would do so in an inefficient way. It therefore allows multi-determinations and undirected analysis.

In a particular embodiment of the invention, the sorbent material is any of those used in solid phase microextraction (SPME) or fabric phase sorptive extraction (FPSE) techniques.

In another aspect, the invention refers to a method for the quantitative analysis of already identified target compounds that comprises a calibration step of the sampling device, prior to steps 1 and 2. For the calibration, a chamber will be used that is connected to the source of gaseous standard to ensure that all fluid of known concentration reaches, without dilution with the surrounding fluid, the sampling device. To carry out this calibration, it is essential to prepare gaseous standards of known concentration that will later be aspirated through the sampling device. The preparation of these gaseous standards can be carried out in various ways already defined as
a. Standard generators.
b. Permeation tubes.

### Description of the figures

Figure 1 shows the incorporation of the "fabric phases" to the air sampling device.
Figure 2 shows the steps to prepare the air sampling device for evaluation.
Figure 3 compares the difference in volatile organic compound retention in the sampler observed at the two flow rates tested.

### Detailed description of the invention

In an experiment to evaluate the effectiveness of the proposed device, a computer fan was used as an active air sampler. The ventilator was powered by a portable external battery of the type used to charge a mobile phone, making the device completely portable.

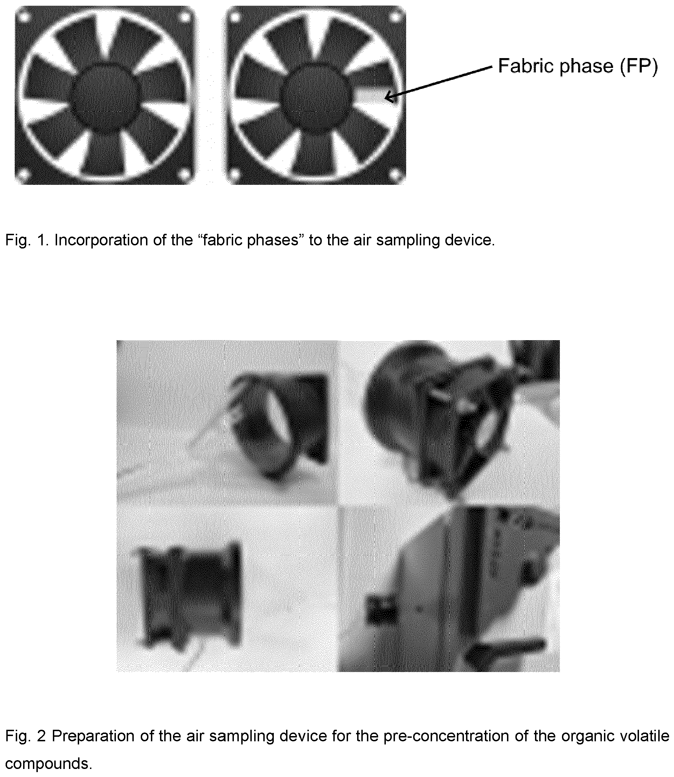

As extractant material Fabric phase (FP) membranes synthesized following the sol-gel method described in Aznar et al. [J. Chromatogr. A. 1500 (2017) 32-42.] were used. Precut pieces of 15x10 mm FP were glued to the fan blades by means of double-sided adhesive tape (Fig. 1).

To evaluate the operating parameters of the device, the fan was coupled to a glass funnel by a diameter reducer, and the funnel was introduced into an oven, the neck of the funnel passing through the outlet of the oven. (Fig. 2)

Subsequently, 8 vials containing individual analytes were introduced into the oven, at a constant temperature of 35 °C. The analytes evaporated inside the oven and were aspirated by the device. The sampled air passed through the fan blades with the FP pieces in which the analytes were retained. Finally, each piece of FP was put into a glass vial and analyzed by HS-GC-MS.

To study the influence of the flow rate on the extraction, the previously described experience was repeated, aspirating 60 liters of air with two different fan speeds. The speed variation was achieved by varying the voltage supplied by the power supply. With a voltage of 5V the measured flow rate was 0.99 ± 0.07 L/min, and with a voltage of 12 V, 3.6 ± 0.2 L/min.

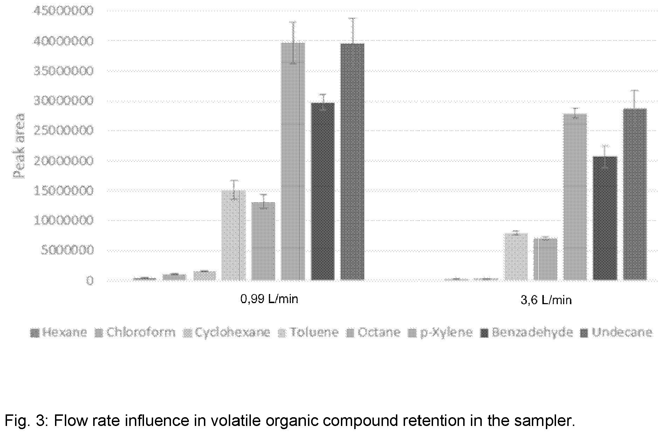

The best results were obtained with the lowest flow rate (Fig. 3), which can be explained by the longer interaction time of the analytes with the sorbent material.

## Claims

1. Portable device for taking air samples consisting of a fan in which blades a sorbent material is disposed.

2. The device according to claim 1, **characterized in that** the sorbent material is adhered to or disposed on the surface of the fan blades.

3. The device according to claim 1, **characterized in that** the fan blades are made of the sorbent material.

4. Method for pre-concentration and sampling of volatile organic compounds with the aid of the device of the invention, comprising the following steps:
a) Operating the device in the space to be sampled for a certain time so that the volatile compounds are retained in the sorbent material,
b) After the sampling stage, the sorbent material is analyzed using an appropriate instrumental technique that can provide qualitative information.

5. The method according to claim 4, **characterized in that** the sampling device contains sorbent materials of different types in its blades.

6. The method according to claim 4, for the quantitative analysis of target compounds, **characterized in that** it comprises a calibration of gaseous standards of known concentration prior to steps a) and b).
